# EUROPÄISCHE PATENTANMELDUNG

(11) **EP 3 748 927 A1**
(43) Veröffentlichungstag der Anmeldung: **09.12.2020**
(21) Anmeldenummer: 19178078.2
(22) Anmeldetag: 04.06.2019
(51) Int. Cl.: H04L 29/06

(54) **VERFAHREN UND SYSTEM ZUM ÜBERWACHEN VON NACHRICHTEN EINER KOMMUNIKATIONSVERBINDUNG**

(71) Anmelder: Siemens Aktiengesellschaft, 80333 München (DE)
(72) Erfinder: Falk, Rainer, 85586 Poing (DE); Fischer, Kai, 85598 Baldham (DE); Fries, Steffen, 85598 Baldham (DE); Furch, Andreas, 85354 Freising (DE); Heintel, Markus, 81377 München (DE); Papagudi Subrahmanyam, Niranjana, 81829 München (DE); Sel, Tolga, 81379 München (DE)

(57) **Zusammenfassung**

Die Erfindung betrifft ein Verfahren und ein System, um eine Überwachung in Automatisierungsanlagen möglichst flexibel zu realisieren. Das Überwachen in Automatisierungsanlagen kann mittels eines Überwachungstokens z. B. fest konfiguriert und durchgeführt werden oder dynamisch für bestimmte Verbindungen oder für einen bestimmten Zeitraum außer Kraft gesetzt werden.

## Beschreibung

Die Erfindung bezieht sich auf ein Verfahren und System zum Überwachen von Nachrichten einer Kommunikationsverbindung.

Nachfolgend werden Aspekte der Erfindung erläutert.

Gemäß einem ersten Aspekt betrifft die Erfindung ein System aufweisend:
- eine Kommunikationsschnittstelle, die zum Empfangen einer Nachricht einer Kommunikationsverbindung eingerichtet ist;
- ein Überwachungssteuerungsmodul, wobei
   o das Überwachungssteuerungsmodul dazu eingerichtet ist eine Überwachung der Nachricht und/oder einer weiteren Nachricht einer weiteren Kommunikationsverbindung und/oder der Kommunikationsverbindung anhand eines Überwachungstokens zu steuern.

Es können mit dem Überwachungssteuerungsmodul z. B. auch mehrere Nachrichten oder alle Nachrichten einer entsprechenden Kommunikationsverbindung überwacht werden. Insbesondere ist es dadurch möglich eine entsprechende Kommunikationsverbindung ganz oder teilweise zu überwachen.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter einer "Prüfsumme" kann im Zusammenhang mit der Erfindung beispielsweise eine kryptographische Prüfsumme oder kryptographischer Hash bzw. Hashwert verstanden werden. Eine entsprechende Prüfsumme kann z. B. mittels einer kryptographischen Hashfunktion gebildet werden. Die Prüfsumme wird z. B. über eine Nachricht (z. B. die Nachricht oder die weitere Nachricht) und/oder über eine oder mehrere Nachrichten (z. B. die Nachricht und die weitere Nachricht) und/oder über einen Teilbereich einer Nachricht (z. B. die Nachricht oder die weitere Nachricht) gebildet oder berechnet. Eine Prüfsumme kann z. B. eine digitale Signatur oder ein kryptographischer Nachrichtenauthentisierungscode sein.

Unter einem "Überwachungstoken" kann im Zusammenhang mit der Erfindung beispielsweise ein Datensatz und/oder eine Überwachungsrichtlinie verstanden werden, mit deren Hilfe z. B. Nachrichten einer Kommunikationsverbindung oder eine Kommunikationsverbindung überwacht werden kann. Der Überwachungstoken (der auch als Monitoringtoken bezeichnet werden kann) kann beispielsweise einen Markierungsdatensatz zum Markieren von zu überwachenden Nachrichten und/oder Verbindungen umfassen und/oder einen Überwachungssteuerungsdatensatz umfassen und/oder eine Überwachungsrichtlinie umfassen oder eine Kombination aus Markierungsdatensatz und/oder Überwachungssteuerungsdatensatz und/oder Überwachungsrichtlinie umfassen. Der Markierungsdatensatz dient beispielsweise als Identifikationsmerkmal (z. B. als ein eindeutiger Identifizierer implementiert) für entsprechende Nachrichten und/oder Kommunikationsverbindungen und/oder Kommunikationsprotokolle, um ggf. für z. B. auf diese Art markierte Nachrichten und/oder Kommunikationsverbindungen und/oder Kommunikationsprotokolle, eine Überwachung zu realisieren bzw. diese für eine Überwachung zu markieren. Hierzu kann das Identifikationsmerkmal beispielsweise noch Informationen über Sender und/oder Empfänger, genutzte Kommunikationsprotokolle, genutzte Sicherheitsprotokolle, Netzwerkdaten (z. B. Latenzzeiten), eine Zeitinformation über die Dauer der Überwachung (oder den Start- und Endezeitpunkt) oder eine Kombination der hier genannten Möglichkeiten umfassen. Der Überwachungssteuerungsdatensatz und/oder die Überwachungsrichtlinie geben z. B. an was überwacht werden soll bzw. darf. Dies sind z. B. welche Nachrichtenteile überprüft werden, welche Arten von Nachrichten, Kommunikationsprotokolle, Kommunikationsverbindungen, Senderadresse, Zieladresse erlaubt oder verboten sind oder eine Kombination der hier genannten Möglichkeiten. In Varianten der Erfindung entspricht der Überwachungssteuerungsdatensatz der Überwachungsrichtlinie bzw. der Überwachungssteuerungsdatensatz umfasst die Überwachungsrichtlinie.

Bei weiteren Ausführungsformen des Systems umfasst beispielsweise die Nachricht und/oder die weitere Nachricht den Überwachungstoken.

Bei weiteren Ausführungsformen des Systems umfasst ein Konfigurationsspeicher des Systems den Überwachungstoken.

Bei weiteren Ausführungsformen des Systems ist ein Sender und/oder ein Empfänger der Nachricht und/oder der weiteren Nachricht dazu eingerichtet, den Überwachungstoken an das System zu übertragen. Alternativ oder zusätzlich wird beispielsweise der Überwachungstoken mittels Kommunikationsprotokollen oder Nachrichten (oder einer Nachricht) an das System und/oder an das weitere System übertragen. Alternativ oder zusätzlich wird beispielsweise der Überwachungstoken mittels des gleichen Kommunikationsprotokolls wie die Nachricht und/oder die weitere Nachricht übertragen oder es wird beispielsweise der Überwachungstoken mittels eines separaten Kommunikationsprotokolls übertragen.

Bei weiteren Ausführungsformen des Systems ist die Nachricht eine Nachricht des Verbindungsaufbaus der Kommunikationsverbindung.

Bei weiteren Ausführungsformen des Systems authentisiert das Überwachungssteuerungsmodul den Überwachungstoken für die Nachricht und/oder die weitere Nachricht mittels eines Richtlinienbestätigungsservers. Alternativ oder zusätzlich überträgt beispielsweise der Richtlinienbestätigungsserver für das Authentisieren einen Überwachungssteuerungsdatensatz und/oder eine Überwachungsrichtlinie an das System. Alternativ oder zusätzlich wird beispielsweise der Überwachungssteuerungsdatensatz und/oder die Überwachungsrichtlinie an das System übertragen, wenn der Überwachungstoken erfolgreich authentisiert wurde (z. B. durch den Richtlinienbestätigungsserver). Alternativ oder zusätzlich wird beispielsweise eine Übertragung des Überwachungssteuerungsdatensatz und/oder der Überwachungsrichtlinie an das System unterbunden, wenn z. B. das Authentisieren des Überwachungstokens fehlschlägt. Alternativ oder zusätzlich ist beispielsweise das Überwachungssteuerungsmodul dazu eingerichtet, für das Authentisieren des Überwachungstokens eine separate Kommunikationsverbindung von dem System zum Richtlinienbestätigungsserver aufzubauen. Alternativ oder zusätzlich ist beispielsweise die separate Kommunikationsverbindung eine gesicherte Kommunikationsverbindung. Wird beispielsweise der Überwachungssteuerungsdatensatz und/oder die Überwachungsrichtlinie an das System übertragen, werden z. B. der Überwachungssteuerungsdatensatz und/oder die Überwachungsrichtlinie durch das System S oder durch den Überwachungstoken selbst in dem Überwachungstoken gespeichert. Ist dies erfolgt, wird dieser geänderte Überwachungstoken beispielsweise durch eine weitere kryptographische Prüfsumme geschützt, die z. B. über den geänderten Überwachungstoken, mit dem darin gespeicherten Überwachungssteuerungsdatensatz und/oder der darin gespeicherten Überwachungsrichtlinie, gebildet wird. Dies kann beispielsweise durch das System S erfolgen.

Beispielsweise kann durch das Übertragen des Überwachungssteuerungsdatensatzes durch den Richtlinienbestätigungsserver realisiert werden, dass das System die Authentisierung nicht selbst durchführt. Diese Authentisierung kann beispielsweise durch einen separaten Server erfolgen (z. B. den Richtlinienbestätigungsserver). Der Überwachungstoken dient hierbei beispielsweise lediglich dazu die zu überwachenden Nachrichten zu markieren. Beispielsweise werden die eigentlichen Regeln für die Überwachung (z. B. welche Teile der Nachricht überprüft werden, welche Arten von Prüfungen durchgeführt werden) erst durch den Überwachungssteuerungsdatensatz und/oder die Überwachungsrichtline festgelegt. Diese Festlegung kann beispielsweise statisch (es wird einmalig für eine bestimmte Konfiguration festgelegt) oder dynamisch während des Betriebes oder der Laufzeit des Systems erfolgen.

Bei weiteren Ausführungsformen des Systems ist der Richtlinienbestätigungsserver und/oder ein weiteres System dazu eingerichtet, den Überwachungstoken an das System zu übertragen und es wird beispielsweise der Überwachungstoken mittels Kommunikationsprotokollen oder Nachrichten an das System und/oder an das weitere System übertragen. Beispielsweise kann dann einer der Teilnehmer (z. B. Sender oder der Empfänger) die Kommunikation mit dem Richtlinienbestätigungsserver durchführen.

Bei weiteren Ausführungsformen des Systems erfolgt das Übertragen des Überwachungstokens an das System über eine separate Kommunikationsverbindung, wobei beispielsweise die separate Kommunikationsverbindung eine gesicherte Kommunikationsverbindung ist.

Bei weiteren Ausführungsformen des Systems umfasst der Überwachungssteuerungsdatensatz eine geänderte Überwachungsrichtlinie und/oder einen geänderten Überwachungstoken, wobei der geänderte Überwachungstoken den Überwachungstoken des Systems ersetzt und/oder die geänderte Überwachungsrichtlinie eine Überwachungsrichtlinie des Überwachungstoken ersetzt.

Bei weiteren Ausführungsformen des Systems umfassen die Nachricht und/oder die weitere Nachricht jeweils mehrere Nachrichtenbereiche, wobei z. B. zumindest einem Teil der Nachrichtenbereiche jeweils ein Nachrichtenkontext (z. B. applikationsbezogene Kommunikation (email Header, Anhänge), Handshake Informationen (Prüfsummen, Authentisierungsinformation, Security Policy), Monitoring Information, etc.) zugeordnet ist.

Bei weiteren Ausführungsformen des Systems umfasst der Überwachungstoken eine Autorisierung für vorgegebene Verarbeitungsoperation für die Nachricht und/oder die weitere Nachricht, wobei beispielsweise die Überwachungsrichtline und/oder die Autorisierung verbindungsspezifisch oder auch applikationsspezifisch ist. Verbindungsspezifisch kann sich hierbei auf die Teilnehmer, aber auch den Kommunikationspfad zwischen den Teilnehmern beziehen. Alternativ oder zusätzlich erfolgt beispielsweise eine Verarbeitung der Nachricht und/oder der weiteren Nachricht durch das System mittels der autorisierten vorgegebenen Verarbeitungsoperationen.

Die Verarbeitungsoperationen können beispielsweise folgendes sein: ein Mitlesen des Verbindungsaufbaus und/oder ein Auswerten des Verbindungsaufbaus hinsichtlich der Einhaltung einer Security Policy und/oder ein aktives Eingreifen in die Aushandlung einer Verbindung zur Einhaltung einer vorgegebenen Security Policy (z. B. Cipher Suites, Schlüssellängen, Schlüsselupdates, etc.) und/oder ein Mitlesen der Kommunikationsdaten und/oder ein Auswerten der Kommunikationsdaten bzgl. Einhaltung einer Security Policy (z. B. klassifizierte Daten oder auch hinsichtlich Malware) und/oder eine Manipulation (z. B. Löschen und/oder Einfügen) von Teilen der Kommunikationsdaten der entsprechenden Nachrichten und/oder ein Beenden der Verbindung im Falle einer Nicht-Einhaltung oder einer Verletzung einer vorgegebenen Security Policy.

Bei weiteren Ausführungsformen des Systems ist der Überwachungstoken mittels eines kryptographischen Schutzes geschützt, wobei beispielsweise der kryptographische Schutz eine kryptographische Prüfsumme ist. Alternativ oder zusätzlich umfassen beispielsweise das System und/oder der Richtlinienbestätigungsserver kryptographische Mittel zum Überprüfen des kryptographischen Schutzes.

Vorteilhaft ist dabei, dass der Überwachungstoken hierdurch z. B. kryptographisch geschützt ist. Der Überwachungstoken kann insbesondere durch die kryptographische Prüfsumme vor unerlaubten Veränderungen geschützt werden (z. B. mittels eines Message Authentication Code oder einer digitalen Signatur). Diese kryptographische Prüfsumme des Überwachungstokens (z. B. auch als Policy-Token bezeichnet) ist vorzugsweise eine digitale Signatur, die durch einen öffentlichen Schlüssel eines Gerätes oder des Gerätes oder des Systems überprüfbar ist. Der Überwachungstoken gibt beispielsweise einen Scope an. Dieser Scope kann z. B. Endpunkte angeben, die an der Kommunikation beteiligt sind oder alle oder bestimmte weitere erfindungsgemäße Systeme (z. B. Middleboxen), die Teil des Kommunikationspfades sind. Der Scope kann ebenfalls die Information enthalten, ob die Systeme auf dem Kommunikationspfad ebenfalls monitoren dürfen oder nur Teil des Pfades sind.

Bei weiteren Ausführungsformen des Systems wird beispielsweise der Überwachungstoken während des Verbindungsaufbaus der Kommunikationsverbindung übertragen, wobei beispielsweise der Überwachungstoken innerhalb eines Security-Protokolls bei der Aushandlung übertragen wird. Alternativ oder zusätzlich wird beispielsweise der Überwachungstoken innerhalb des Aufbaus einer Security Session übertragen. Alternativ oder zusätzlich werden beispielsweise der Überwachungstoken von dem Richtlinienbestätigungsserver oder einem Richtlinienverwaltungsserver übertragen.

Es ist beispielsweise auch möglich, dass der Überwachungstoken direkt vom Richtlinienüberwachungsserver oder einem weiteren System an das System übertragen wird.

Bei weiteren Ausführungsformen des Systems wird der Überwachungstoken als eine Erweiterung (z. B. eine Protokollerweiterung) des verwendeten Kommunikationsprotokolle übertragen.

Bei weiteren Ausführungsformen des Systems ist ein Sender und/oder ein Empfänger der Nachricht und/oder der weiteren Nachricht dazu eingerichtet, eine Anforderungsnachricht an das System und/oder einen Richtlinienbestätigungsserver und/oder einen Richtlinienverwaltungsserver zu übertragen, wobei beispielsweise das System oder das Überwachungssteuerungsmodul dazu eingerichtet sind, den Überwachungstoken anhand der Anforderungsnachricht von dem Richtlinienbestätigungsserver und/oder dem Richtlinienverwaltungsserver abzurufen oder anzufordern.

Bei weiteren Ausführungsformen des Systems übertragen der Richtlinienbestätigungsserver und/oder der Richtlinienverwaltungsserver den Überwachungstoken anhand der Anforderungsnachricht an das System.

Die Erfindung ist dahingehend vorteilhaft, dass beispielsweise ein Monitoring in Automatisierungsanlagen fix konfiguriert und durchgeführt werden kann, wobei z. B. mittels des Überwachungstokens ein dynamischer Monitoring Policy Token realisiert werden kann. Mit diesem kann beispielsweise das Monitoring für bestimmte Verbindungen oder für einen bestimmten Zeitraum außer Kraft gesetzt werden.

Gemäß einem weiteren Aspekt betrifft die Erfindung ein computerimplementiertes Verfahren mit folgenden Verfahrensschritten:
- Empfangen einer Nachricht einer Kommunikationsverbindung;
- Steuern einer Überwachung der Nachricht und/oder einer weiteren Nachricht einer weiteren Kommunikationsverbindung und/oder der Kommunikationsverbindung anhand eines Überwachungstokens.

Bei weiteren Ausführungsformen des Verfahrens umfasst das Verfahren weitere Verfahrensschritte, um die funktionalen Merkmale des Systems oder um weitere Merkmale des Systems bzw. dessen Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße System erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße System erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies explizit in dem jeweiligen Ausführungsbeispiel genannt sein muss.

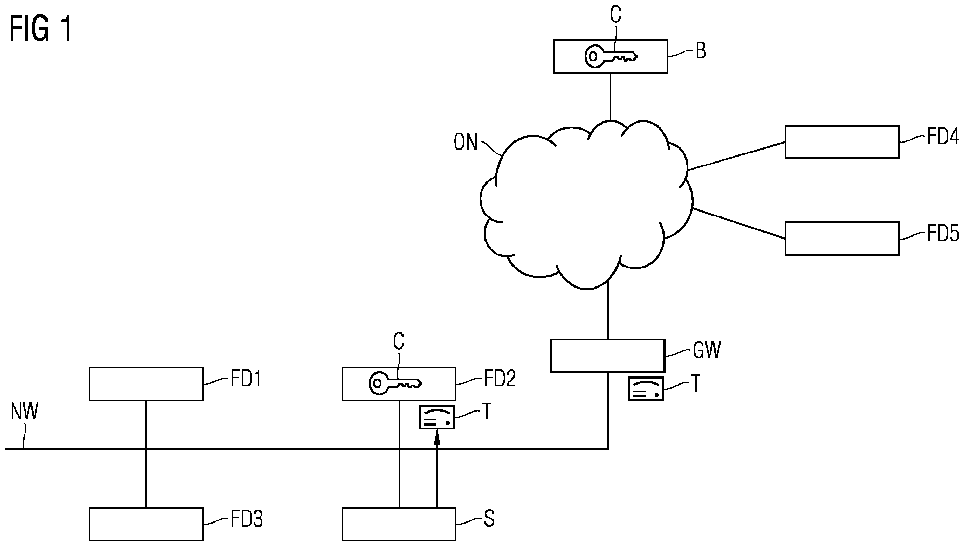

Fig. 1 zeigt ein Ausführungsbeispiel der Erfindung.

Ein Überwachungssystem (z. B. ein erfindungsgemäßes System) umfasst eine Kommunikationsschnittstelle und ein Überwachungssteuerungsmodul, die vorzugsweise über einen Bus kommunikativ verbunden sind.

Die Kommunikationsschnittstelle ist zum Empfangen einer Nachricht einer Kommunikationsverbindung eingerichtet.

Das Überwachungssteuerungsmodul ist dazu eingerichtet, eine Überwachung der Nachricht und/oder einer weiteren Nachricht einer weiteren Kommunikationsverbindung und/oder der Kommunikationsverbindung anhand eines Überwachungstokens T zu steuern.

Das Überwachungssystem kann beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Das Überwachungssystem kann dabei beispielsweise von einem oder mehreren Komponenten des in Fig. 1 gezeigten cyberphysikalischen Systems implementiert sein bzw. entsprechende Komponenten umfassen das Überwachungssystem.

Beispielsweise kann ein System S oder ein Gateway GW das Überwachungssystem umfassen.

Das System S ist dabei Teil des cyberphysikalischen Systems (z. B. ein Automatisierungssystem). Das Automatisierungssystem umfasst dabei mehrere Geräte. Die Geräte können z. B. IoT Geräte oder Feldgeräte sein, wie z. B. ein erstes Feldgerät FD1, ein zweites Feldgerät FD2, ein drittes Feldgerät FD3, ein viertes Feldgerät FD4 und ein fünftes Feldgerät FD5.

Das erste Feldgerät FD1, das zweite Feldgerät FD2 und das dritte Feldgerät FD3 sind z. B. Teil einer Netzwerkinfrastruktur NW (z. B. ein Automatisierungsnetzwerk) und entsprechend über die Netzwerkinfrastruktur NW miteinander kommunikativ verbunden.

Die Netzwerkinfrastruktur NW umfasst beispielsweise noch das System S und das Gateway GW. Über das Gateway GW sind mittels eines offenen Netzwerkes (z. B. das Internet, oder ein WAN) ein Backend Service B, das vierte Feldgerät FD4 und das fünfte Feldgerät FD5 mit der Netzwerkinfrastruktur NW verbunden.

Mit anderen Worten können der Backend Service B und/oder das vierte Feldgerät FD4 und/oder das fünfte Feldgerät FD5 über das Gateway GW und das offene Netzwerk mit dem System S und/oder dem ersten Feldgerät FD1 und/oder dem zweiten Feldgerät FD2 und/oder dem dritten Feldgerät FD3 kommunizieren. Auch die Feldgeräte können beispielsweise das Überwachungssystem umfassen. Beispielsweise umfasst ein einzelnes Feldgerät, wie das zweite Feldgerät FD2, oder mehrerer Feldgeräte, wie z. B. das zweite Feldgerät FD2 und das vierte Feldgerät FD4, oder alle Feldgeräte ein entsprechendes Überwachungssystem.

Das zweite Feldgerät FD2 ist z. B. mit einem Backend-Service B über ein abgesichertes Protokoll verbunden, wobei das dafür nötige kryptographische Schlüsselmaterial durch das Schlüsselsymbol jeweils dargestellt ist.

Das zweite Feldgerät FD2, z. B. ein IoT-Gerät, verwendet dabei ein kryptographisches Security-Protokoll, insbesondere ein TLS-Protokoll (z.B. TLS1.2, TLS1.3). Es können z. B. auch andere Protokolle wie IPsec/IKEv2 oder MACsec (802.1AE/X) verwendet werden.

Wenn das zweite Feldgerät FD2 eine Verbindung zu einem Backend-Service aufbaut, so erhält es z. B. im Rahmen des Verbindungsaufbaus (Authentisierung und Schlüsselvereinbarung) ein Überwachungstoken T, der z. B. als digital signiertes Security-Policy-Token realisiert ist. Dieser Token T wurde z. B. zuvor durch einen Token Service ausgestellt.

Für die Bereitstellung dieses Tokens bzw. des Überwachungstokens T authentisiert sich das Feldgerät beim Token-Service, der z. B. durch das System S oder einer anderen Netzwerkkomponente bereitgestellt wird. Der Token-Service kann z. B. als IAM System implementiert sein.

Mittels des Überwachungstokens T können z. B. Operationen auf Nachrichten des Senders (z. B. der Backend Service B) insbesondere durch das System S oder das Gateway GW unterbunden oder eingeschränkt werden. Hierzu wird der Überwachungstoken T bereitgestellt, der für eine spezifische Verbindung oder deren Nachrichten angibt, ob diese Verbindung durch das System S oder einer anderen Netzwerkkomponenten (z. B. ein IDS oder eine Firewall oder das Gateway GW) zu überwachen ist.

Der Überwachungstoken kann z. B. vom Sender oder Empfänger angefordert werden und z. B. im Rahmen des Verbindungsaufbaus durch das System S (z. B. eine Middlebox) als Bestandteil der Nachricht bereitgestellt werden. Die Anforderung des Überwachungstokens kann beispielsweise an einen Richtlinienbestätigungsserver (z. B. ein Monitoring Policy Authorization Server) oder einen Richtlinienverwaltungsserver gerichtet sein. Hierzu überträgt der Sender oder der Empfänger z. B. eine entsprechende Anforderungsnachricht an denjenigen, der den Überwachungstoken T bereitstellen soll.

Alternativ oder zusätzlich kann bei einem Verbindungsaufbau z. B. das System S, das Gateway GW oder das zweite Feldgerät FD2 ihren Auswertungsbedarf gemäß einer lokalen Policy anmelden und ein Server, z. B. der Richtlinienbestätigungsserver oder der Richtlinienverwaltungsserver, kann dies bestätigen (explizit oder implizit durch Nichtausstellen eines Monitoring Policy Tokens).

Alternativ kann dem System S, dem Gateway GW oder dem zweiten Feldgerät FD2 eine geänderte Überwachungsrichtlinie (z. B. eine Monitoring-Policy) und/oder ein geänderter Überwachungssteuerungsdatensatz und/oder ein geänderter Überwachungstoken bereitgestellt werden.

Der geänderte Überwachungstoken kann beispielsweise den Überwachungstoken T des Systems oder des Gateways GW oder des Feldgerätes FD2 ersetzen und/oder die geänderte Überwachungsrichtlinie eine Überwachungsrichtlinie des Überwachungstoken des Systems S oder des Gateways GW oder des Feldgerätes FD2 ersetzen und/oder der geänderte Überwachungssteuerungsdatensatz einen Überwachungssteuerungsdatensatz des Überwachungstoken des Systems S oder des Gateways GW oder des Feldgerätes FD2 ersetzen.

Es kann z. B. in diesen Fällen der Überwachungstoken T von dem Sender, dem Empfänger, von dem System S, von dem Gateway GW oder dem Feldgerät FD2 oder von einem anderen System angefordert werden.

Der Überwachungstoken T kann z. B. unabhängig von den Nachrichten zwischen Sender und Empfänger den anfragenden Komponenten auf einem unabhängigem Kommunikationskanal bereitgestellt werden.

Der Überwachungstoken T beinhaltet z. B. verbindungsspezifisch eine durch eine dritte Komponente ausgestellte Autorisierung für bestimmte Operationen und kann in den verwendeten Kommunikationsprotokollen transportiert werden.

Dieser Überwachungstoken T ist z. B. nicht für den finalen Empfänger der überwachten Nachricht gedacht, sondern ist für Komponenten auf dem Transportweg gedacht (z. B. dem Gateway GW), die diesen Überwachungstoken auswerten. Dies kann beispielsweise eingesetzt werden, wenn Nachrichten zwischen dem zweiten Feldgerät FD2 und dem Backend Service B über das Gateway ausgetauscht werden. Hierbei gibt der Überwachungstoken T beispielsweise vor, dass die entsprechenden Nachrichten der hierfür genutzten Kommunikationsverbindung zwingend von der Netzwerkadresse Backend Service B kommen müssen und nur an die Netzwerkadresse des Feldgerätes FD2 gerichtet sein dürfen. Zudem kann z. B. vorgegeben sein, dass die entsprechenden Nachrichten und/oder die Kommunikationsverbindung kryptographisch geschützt sind. Diese Vorgaben sind durch den Überwachungstoken T, z. B. über eine entsprechende Überwachungsrichtlinie, festgelegt. Der entsprechende Überwachungstoken T wird dann z. B. der Kommunikationsverbindung beispielsweise durch das zweite Feldgerät FD2 und/oder das System S zugeordnet. Das zweite Feldgerät FD2, das Gateway GW oder auch das System S überwachen dann die Kommunikationsverbindung anhand der Vorgaben des Überwachungstokens T.

Der Überwachungstoken T ist vorzugsweise kryptographisch geschützt, sodass er durch eine Kommunikationskomponente nicht unbemerkt manipuliert werden kann. Der Überwachungstoken T kann z. B. innerhalb eines Security-Protokolls bei der Aushandlung übertragen werden (z.B. innerhalb des TLS Handshakes).

Dies ist vorteilhaft, da schon während der Aushandlung bekannt ist, welche Operationen für das System S oder das Gateway GW zulässig sind.

In einer Variante kann z. B. der Überwachungstoken T innerhalb des Aufbaus einer Security Session übertragen werden und erst bei einer zeitlich nachgelagerten Kommunikation oder auch bei der Kommunikation über einen anderen Weg genutzt werden.

Dies ist z. B. bei Installationen vorteilhaft, bei denen das eigentliche Endgerät (Empfänger der Nachrichten z. B. das zweite Feldgerät FD2) nicht modifiziert werden kann.

Insbesondere kann der Überwachungstoken T durch eine autorisierte dritte Partei (z. B. den Betreiber einer Middlebox bzw. des Systems S) ausgestellt werden.

Dazu wird z. B. der Überwachungstoken T als Protokollerweiterung im Handshake des Sicherheitsprotokolls (insbesondere TLS) vorgesehen, das z. B. den Aufbau einer Security-Session mit einer spezifischen Security Policy versieht.

Die Erfindung ist insbesondere für ein TLS-Protokoll vorteilhaft, kann beispielsweise auch für andere Security-Protokolle wie IKEv2, MACsec 802.1AE/X verwendet werden.

Durch den Überwachungstoken T wird z. B. einem Kommunikationselement (z. B. ein Netzwerkgerät, das die Nachrichten überträgt) manipulationsgeschützt Information bereitgestellt, welche Operationen auf den ausgetauschten Daten des zugeordneten Kommunikationsprotokolls zulässig sind.

Beispielsweise sind die Protokollerweiterung bzw. der Überwachungstoken als Struktur definiert, die optional auch gegen Veränderungen geschützt sein kann. Der Überwachungstoken kann insbesondere durch eine kryptographische Prüfsumme geschützt werden (Message Authentication Code, digitale Signatur). Diese kryptographische Prüfsumme des Überwachungstokens ist vorzugsweise eine digitale Signatur, die durch einen öffentlichen Schlüssel des Gerätes (z. B. des zweiten Feldgerätes FD2) überprüfbar ist. Der Überwachungstoken gibt z. B. einen Scope an (Endpunkte, die an der Kommunikation beteiligt sind, alle oder bestimmte Middleboxen, die Teil des Kommunikationspfades sind).

Die Protokollerweiterung bzw. der Überwachungstoken gibt z. B. Operationen vor, die eine Middlebox oder ein System S auf den Daten ausführen darf, wie z. B.:
- Mitlesen des Verbindungsaufbaus
- Auswerten des Verbindungsaufbaus hinsichtlich der Einhaltung einer Security Policy
- Aktives Eingreifen in die Aushandlung einer Verbindung zur Einhaltung einer vorgegebenen Security Policy (Cipher Suites, Schlüssellängen, etc.).
- Mitlesen der Kommunikationsdaten
- Auswerten der Kommunikationsdaten bzgl. Einhaltung einer Security Policy (Klassifizierte Daten oder auch hinsichtlich Malware)
- Manipulation (Löschen / Einfügen) von Teilen der Kommunikationsdaten
- Beendigung der Verbindung im Falle der Nicht-Compliance mit einer vorgegebenen Security Policy

Auch eine Kombination der genannten Operationen können ggf. vorgegeben sein.

In einer erweiterten Variante können z. B. die Protokollerweiterung bzw. der Überwachungstoken einen Zeitraum festlegen, für den die Autorisierung gültig ist. Das kann im default-Fall die aktuelle Session sein, in der z. B. die entsprechenden Nachrichten ausgetauscht werden. Über die Angabe eines Zeitparameters kann beispielsweise auch festgelegt werden, ob der Überwachungstoken oder eine Überwachungsrichtlinie des Überwachungstokens für mehrere Sessions über einen längeren Zeitraum zwischen denselben Kommunikationspartnern gilt. Dabei sind z. B. folgende Varianten möglich:
- Zeitraum, für den die Monitoring Policy Settings gültig sind
- Zahl der TLS Sessions, für die die Monitoring Policy gültig ist

Der Überwachungstoken kann z. B. binär, als ASN.1-Datenstruktur, als XML-Datenstruktur oder als JSON-Datenstruktur oder als JSON Web Token (JWT) codiert sein.

Wird der Überwachungstoken binär, als ASN.1-Datenstruktur, kodiert, kann er z.B. als Teil des Client Zertifikates oder auch als Attributzertifikat transportiert werden. Dies ermöglicht die Ausstellung eines Zertifikates unter Berücksichtigung einer vorgegebenen Montoring Policy für das zertifikatsnutzende Gerät.

Es kann insbesondere in einen JWT einkodiert sein, der einem Client von einem IAM-Server zur Kommunikation mit einem (Web-)Service bereitgestellt wird.

Dadurch kann ein IAM-Server einem Client einen JWT bereitstellen, der den erfindungsgemäßen Überwachungstoken für einen bestimmten Kommunikationsweg umfasst.

Wird die Protokollerweiterung bzw. der Überwachungstoken z. B. im Kontext von TLS 1.2 verwendet, kann die Erweiterung sowohl von einem TLS Client (als Erweiterung in der ClientHello Message), als auch von einem TLS-Server (als Erweiterung der ServerHello Message) verwendet werden.

Im Falle von TLS 1.3 kann diese Erweiterung nur im ClientHello verwendet werden, da die ServerHello Nachricht schon verschlüsselt wird.

In einer weiteren Variante werden die Protokollerweiterung bzw. der Überwachungstoken nicht als Wert, sondern als Referenz übertragen. Dazu wird z. B. in die Protokollerweiterung eine URI zu der entsprechenden Überwachungsrichtlinie des Überwachungstokens angegeben.

Eine Protokollerweiterung für die Umsetzung des Überwachungstokens bzw. einer Überwachungsrichtlinie kann wie folgt realisiert sein (hier z. B. als C Struktur codiert). Im Protokoll können auch andere Codierungen verwendet werden, wie ASN.1, JSON, oder XML.

```
     struct {
          address sender, // Senderadresse
          address receiver, // Empfängeradresse
          time zeitstempel,
          bool read_handshake, // Mitlesen des Verbindungs-
          aufbaus
          bool eval_handshake, // Auswerten des Verbindungs-
          aufbaus
          bool manipulate_handshake, // Aktives Eingreifen in
          Aushandlung
          bool read_communication, // Mitlesen der Kommunika-
          tionsdaten
          bool eval_communication, // Auswerten der Kommuni-
          kationsdaten
          bool manipulate_communication, // Manipulation Kom-
          munikation
          bool terminate_communication, // Beendigung der
          Verbindung
          Signature authorization // signature of policy is-
          suer
     }MonPol
```

Im Folgenden wird beispielshaft die Erweiterung der Nachrichtentypen des Handshake Protocols um den Nachrichtentyp "monitoring_policy" dargestellt. Die Erweiterung ist der Typ 21 (fett gedruckt), die Originaldefinition der Nachrichtentypen ist RFC 4246, Kapitel 7.4 entnommen.

```
     enum {
          hello_request(0), client_hello(1), server_hello(2),
          certificate(11), server_key_exchange (12),
          certificate_request(13), server_hello_done(14),
          certificate_verify(15), client_key_exchange(16),
          finished(20), monitoring policy (21), (255)
     } HandshakeType;
     struct {
          HandshakeType msg_type; /* handshake type */
          uint24 length; /* bytes in message */
          select (HandshakeType) {
               case hello_request: HelloRequest;
               case client_hello: ClientHello;
               case server_hello: ServerHello;
               case certificate: Certificate;
               case server_key_exchange: ServerKeyExchange;
               case certificate_request: CertificateRequest;
               case server_hello_done: ServerHelloDoPolicyne;
               case certificate_verify: CertificateVerify;
               case client_key_exchange: ClientKeyExchange;
               case finished: Finished;
               case monitoring policy: MonPol;
          } body;
     } Handshake;
```

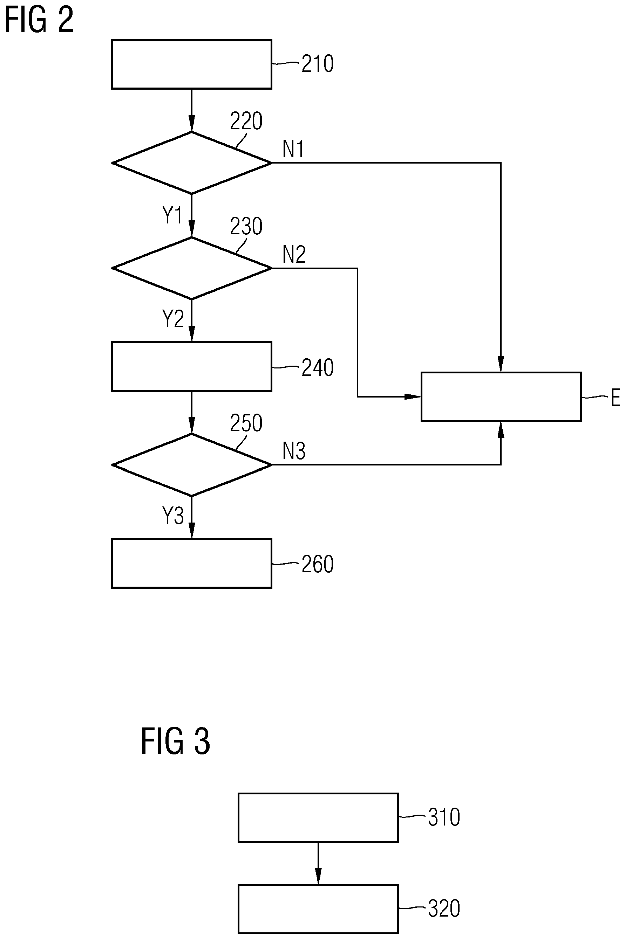

Die Fig. 2 zeigt den Umgang mit der Protokollerweiterung zur Realisierung des Überwachungstokens bzw. der Überwachungsrichtlinie des Überwachungstokens im TLS Handshake auf einer Middlebox oder dem System S.

Um sicherzustellen, dass die Protokollerweiterung zur Realisierung des Überwachungstokens bzw. der Überwachungsrichtlinie des Überwachungstokens auch mit TLS 1.3 funktioniert, wird angenommen, dass die Protokollerweiterung in der ClientHello Nachricht verwendet wird, da diese rückwärtskompatibel zu TLS 1.2 ist.

Zunächst wird in Schritt 210 der Überwachungstoken bzw. die Überwachungsrichtlinie (z. B. des Überwachungstokens) aus der Handshake-Message ausgelesen.
In einem Schritt 220 wird überprüft, ob die Überwachungsrichtlinie bzw. der Überwachungstoken authentisch ist. Hierzu kann ggf. eine Prüfsumme überprüft werden. Ist diese Authentizitätsüberprüfung nicht erfolgreich N1, wird z. B. eine Fehlermeldung E oder eine Steuernachricht bereitgestellt, um ggf. einen Administrator zu informieren und/oder das Ereignis zu protokollieren.

Ist die Überwachungsrichtlinie bzw. der Überwachungstoken authentisch Y1 wird im Schritt 230 überprüft, ob die Überwachungsrichtlinie bzw. der Überwachungstoken durch die entsprechende Middlebox oder durch das System S überhaupt umsetzbar ist. Ist diese Umsetzbarkeitsüberprüfung nicht erfolgreich N2, wird z. B. eine Fehlermeldung E oder eine Steuernachricht bereitgestellt, um ggf. einen Administrator zu informieren und/oder das Ereignis zu protokollieren.

Ist diese Überprüfung erfolgreich Y2 wird in einem Schritt 240 der Überwachungstoken bzw. die Überwachungsrichtlinie auf die entsprechende/n Nachricht/en der entsprechenden Kommunikationsverbindung angewendet.

Danach wird z. B. in einem Schritt 250 überprüft, ob das Anwenden des Überwachungstokens bzw. der Überwachungsrichtlinie auf die entsprechende/n Nachricht/en der entsprechenden Kommunikationsverbindung erfolgreich war. Ist diese Anwendungsüberprüfung nicht erfolgreich N3, wird z. B. eine Fehlermeldung E oder eine Steuernachricht bereitgestellt, um ggf. einen Administrator zu informieren und/oder das Ereignis zu protokollieren.

Konnte die Überwachungsrichtlinie bzw. der Überwachungstoken erfolgreich angewendet werden Y3, so wird die Kommunikation bzw. die entsprechenden Nachrichten der entsprechenden Kommunikationsverbindung z. B. aktiv oder passiv entsprechend des Überwachungstoken bzw. der Überwachungsrichtlinie überwacht.

In einer Variante kann der Überwachungstoken von Middlebox-Komponenten oder dem System S bei einem Verbindungsaufbau direkt abgefragt werden, so dass das Token nicht in der Nachricht übertragen werden muss. Hierzu authentifiziert sich z. B. das System S oder eine Middlebox am Monitoring Policy Authorization Server und fragt das aktuell gültige Token für die Verbindung zwischen Sender und Empfänger ab.

Die Erfindung ist vorteilhaft, um eine Überwachung in Automatisierungsanlagen möglichst flexibel zu realisieren. Das Überwachen in Automatisierungsanlagen kann mittels des Überwachungstokens z. B. fest konfiguriert und durchgeführt werden oder dynamisch für bestimmte Verbindungen oder für einen bestimmten Zeitraum außer Kraft gesetzt werden kann.

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert, indem es z. B. durch einen Prozessor ausgeführt wird.

Das Verfahren umfasst einen ersten Verfahrensschritt 310 zum Empfangen einer Nachricht einer Kommunikationsverbindung.

Das Verfahren umfasst einen zweiten Verfahrensschritt 320 zum Steuern einer Überwachung der Nachricht und/oder einer weiteren Nachricht einer weiteren Kommunikationsverbindung und/oder der Kommunikationsverbindung anhand eines Überwachungstokens.

Das Verfahren ist beispielsweise ein Verfahren zum Überwachen von Geräten, wobei
- die Geräte beispielsweise Feldgeräte eines Automatisierungsnetzes sind,
- beispielsweise das Überwachen anhand der Nachricht oder der weiteren Nachricht realisiert wird,
- die Überwachung z. B. mittels des Überwachungstokens realisiert ist.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. System aufweisend:
- eine Kommunikationsschnittstelle, die zum Empfangen einer Nachricht einer Kommunikationsverbindung eingerichtet ist;
- ein Überwachungssteuerungsmodul, wobei
o das Überwachungssteuerungsmodul dazu eingerichtet ist eine Überwachung der Nachricht und/oder einer weiteren Nachricht einer weiteren Kommunikationsverbindung und/oder der Kommunikationsverbindung anhand eines Überwachungstokens zu steuern.

2. System nach einem der vorhergehenden Ansprüche, wobei die Nachricht und/oder die weitere Nachricht den Überwachungstoken umfasst.

3. System nach einem der vorhergehenden Ansprüche, wobei ein Konfigurationsspeicher des Systems den Überwachungstoken umfasst.

4. System nach einem der vorhergehenden Ansprüche, wobei
- ein Sender und/oder ein Empfänger der Nachricht und/oder der weiteren Nachricht dazu eingerichtet ist, den Überwachungstoken an das System zu übertragen,
- beispielsweise der Überwachungstoken mittels Kommunikationsprotokolle an das System und/oder an das weitere System übertragen wird,
- beispielsweise der Überwachungstoken mittels des gleichen Kommunikationsprotokolls wie die Nachricht und/oder die weitere Nachricht übertragen wird oder beispielsweise der Überwachungstoken mittels eines separaten Kommunikationsprotokolls übertragen wird.

5. System nach einem der vorhergehenden Ansprüche, wobei die Nachricht eine Nachricht des Verbindungsaufbaus der Kommunikationsverbindung ist.

6. System nach einem der vorhergehenden Ansprüche, wobei
- das Überwachungssteuerungsmodul den Überwachungstoken für die Nachricht und/oder die weitere Nachricht mittels eines Richtlinienbestätigungsservers authentisiert,
- beispielsweise der Richtlinienbestätigungsserver für das Authentisieren einen Überwachungssteuerungsdatensatz an das System überträgt,
- beispielsweise der Überwachungssteuerungsdatensatz an das System übertragen wird, wenn der Überwachungstoken erfolgreich authentisiert wurde,
- beispielsweise eine Übertragung des Überwachungssteuerungsdatensatzes an das System unterbunden wird, wenn das Authentisieren des Überwachungstokens fehlschlägt,
- beispielsweise das Überwachungssteuerungsmodul dazu eingerichtet ist, für das Authentisieren des Überwachungstokens eine separate Kommunikationsverbindung von dem System zum Richtlinienbestätigungsserver aufzubauen,
- beispielsweise die separate Kommunikationsverbindung eine gesicherte Kommunikationsverbindung ist.

7. System nach einem der vorhergehenden Ansprüche, wobei
- der Richtlinienbestätigungsserver und/oder ein weiteres System dazu eingerichtet ist, den Überwachungstoken an das System zu übertragen,
- beispielsweise der Überwachungstoken mittels Kommunikationsprotokollen an das System und/oder an das weitere System übertragen wird.

8. System nach einem der vorhergehenden Ansprüche, wobei
- das Übertragen des Überwachungstokens an das System über eine separate Kommunikationsverbindung erfolgt,
- beispielsweise die separate Kommunikationsverbindung eine gesicherte Kommunikationsverbindung ist.

9. System nach einem der vorhergehenden Ansprüche, wobei
- der Überwachungssteuerungsdatensatz eine geänderte Überwachungsrichtlinie und/oder einen geänderten Überwachungstoken umfasst,
- der geänderte Überwachungstoken den Überwachungstoken des Systems ersetzt und/oder die geänderte Überwachungsrichtlinie eine Überwachungsrichtlinie des Überwachungstokens ersetzt.

10. System nach einem der vorhergehenden Ansprüche, wobei
- die Nachricht und/oder die weitere Nachricht jeweils mehrere Nachrichtenbereiche umfassen,
- zumindest einem Teil der Nachrichtenbereiche jeweils ein Nachrichtenkontext zugeordnet ist.

11. System nach einem der vorhergehenden Ansprüche, wobei
- der Überwachungstoken eine Autorisierung für vorgegebene Verarbeitungsoperationen für die Nachricht und/oder die weitere Nachricht umfasst,
- beispielsweise die Überwachungsrichtline und/oder die Autorisierung verbindungsspezifisch ist,
- beispielsweise eine Verarbeitung der Nachricht und/oder der weiteren Nachricht durch das System anhand der mittels der autorisierten vorgegebenen Verarbeitungsoperationen erfolgt.

12. System nach einem der vorhergehenden Ansprüche, wobei
- der Überwachungstoken mittels eines kryptographischen Schutzes geschützt ist,
- beispielsweise der kryptographische Schutz eine kryptographische Prüfsumme ist,
- beispielsweise das System und/oder Richtlinienbestätigungsservers kryptographische Mittel zum Überprüfen des kryptographischen Schutzes umfassen.

13. System nach einem der vorhergehenden Ansprüche, wobei
- beispielsweise der Überwachungstoken während des Verbindungsaufbaus der Kommunikationsverbindung übertragen wird, oder
- beispielsweise der Überwachungstoken innerhalb eines Security-Protokolls bei der Aushandlung übertragen wird, oder
- beispielsweise der Überwachungstoken innerhalb des Aufbaus einer Security Session übertragen wird,
- beispielsweise der Überwachungstoken von dem Richtlinienbestätigungsserver oder einem Richtlinienverwaltungsserver übertragen wird.

14. System nach einem der vorhergehenden Ansprüche, wobei der Überwachungstoken als eine Erweiterung des verwendeten Kommunikationsprotokolls übertragen wird.

15. System nach einem der vorhergehenden Ansprüche, wobei
- ein Sender und/oder ein Empfänger der Nachricht und/oder der weiteren Nachricht dazu eingerichtet ist, eine Anforderungsnachricht an das System und/oder einen Richtlinienbestätigungsserver und/oder einen Richtlinienverwaltungsserver zu übertragen,
- beispielsweise das System oder das Überwachungssteuerungsmodul dazu eingerichtet sind, den Überwachungstoken anhand der Anforderungsnachricht von dem Richtlinienbestätigungsserver und/oder dem Richtlinienverwaltungsserver abzurufen oder anzufordern;

16. System nach Anspruch 15, wobei der Richtlinienbestätigungsserver und/oder der Richtlinienverwaltungsserver den Überwachungstoken anhand der Anforderungsnachricht an das System übertragen.

17. Computerimplementiertes Verfahren mit folgenden Verfahrensschritten:
- Empfangen einer Nachricht einer Kommunikationsverbindung;
- Steuern einer Überwachung der Nachricht und/oder einer weiteren Nachricht einer weiteren Kommunikationsverbindung und/oder der Kommunikationsverbindung anhand eines Überwachungstokens.

18. Computerprogrammprodukt mit Programmbefehlen zur Durchführung des Verfahrens nach Anspruch 17.

19. Bereitstellungsvorrichtung für das Computerprogrammprodukt nach Anspruch 18, wobei die Bereitstellungsvorrichtung das Computerprogrammprodukt speichert und/oder bereitstellt.

## Geänderte Patentansprüche

### Geänderte Patentansprüche gemäss Regel 137(2) EPÜ.

1. System aufweisend:
- eine Kommunikationsschnittstelle, die zum Empfangen einer Nachricht einer Kommunikationsverbindung eingerichtet ist;
- ein Überwachungssteuerungsmodul, wobei
∘ das Überwachungssteuerungsmodul dazu eingerichtet ist eine Überwachung der Nachricht und/oder einer weiteren Nachricht einer weiteren Kommunikationsverbindung und/oder der Kommunikationsverbindung anhand eines Überwachungstokens zu steuern,
∘ der Überwachungstoken eine Überwachungsrichtlinie umfasst.

2. System nach einem der vorhergehenden Ansprüche, wobei die Nachricht und/oder die weitere Nachricht den Überwachungstoken umfasst.

3. System nach einem der vorhergehenden Ansprüche, wobei ein Konfigurationsspeicher des Systems den Überwachungstoken umfasst.

4. System nach einem der vorhergehenden Ansprüche, wobei
- ein Sender und/oder ein Empfänger der Nachricht und/oder der weiteren Nachricht dazu eingerichtet ist, den Überwachungstoken an das System zu übertragen,
- beispielsweise der Überwachungstoken mittels Kommunikationsprotokolle an das System und/oder an das weitere System übertragen wird,
- beispielsweise der Überwachungstoken mittels des gleichen Kommunikationsprotokolls wie die Nachricht und/oder die weitere Nachricht übertragen wird oder beispielsweise der Überwachungstoken mittels eines separaten Kommunikationsprotokolls übertragen wird.

5. System nach einem der vorhergehenden Ansprüche, wobei die Nachricht eine Nachricht des Verbindungsaufbaus der Kommunikationsverbindung ist.

6. System nach einem der vorhergehenden Ansprüche, wobei
- das Überwachungssteuerungsmodul den Überwachungstoken für die Nachricht und/oder die weitere Nachricht mittels eines Richtlinienbestätigungsservers authentisiert,
- beispielsweise der Richtlinienbestätigungsserver für das Authentisieren einen Überwachungssteuerungsdatensatz an das System überträgt,
- beispielsweise der Überwachungssteuerungsdatensatz an das System übertragen wird, wenn der Überwachungstoken erfolgreich authentisiert wurde,
- beispielsweise eine Übertragung des Überwachungssteuerungsdatensatzes an das System unterbunden wird, wenn das Authentisieren des Überwachungstokens fehlschlägt,
- beispielsweise das Überwachungssteuerungsmodul dazu eingerichtet ist, für das Authentisieren des Überwachungstokens eine separate Kommunikationsverbindung von dem System zum Richtlinienbestätigungsserver aufzubauen,
- beispielsweise die separate Kommunikationsverbindung eine gesicherte Kommunikationsverbindung ist.

7. System nach einem der vorhergehenden Ansprüche, wobei
- der Richtlinienbestätigungsserver und/oder ein weiteres System dazu eingerichtet ist, den Überwachungstoken an das System zu übertragen,
- beispielsweise der Überwachungstoken mittels Kommunikationsprotokollen an das System und/oder an das weitere System übertragen wird.

8. System nach einem der vorhergehenden Ansprüche, wobei
- das Übertragen des Überwachungstokens an das System über eine separate Kommunikationsverbindung erfolgt,
- beispielsweise die separate Kommunikationsverbindung eine gesicherte Kommunikationsverbindung ist.

9. System nach einem der vorhergehenden Ansprüche, wobei
- einen Überwachungssteuerungsdatensatz eine geänderte Überwachungsrichtlinie und/oder einen geänderten Überwachungstoken umfasst,
- der geänderte Überwachungstoken den Überwachungstoken des Systems ersetzt und/oder die geänderte Überwachungsrichtlinie eine Überwachungsrichtlinie des Überwachungstokens ersetzt.

10. System nach einem der vorhergehenden Ansprüche, wobei
- die Nachricht und/oder die weitere Nachricht jeweils mehrere Nachrichtenbereiche umfassen,
- zumindest einem Teil der Nachrichtenbereiche jeweils ein Nachrichtenkontext zugeordnet ist.

11. System nach einem der vorhergehenden Ansprüche, wobei
- der Überwachungstoken eine Autorisierung für vorgegebene Verarbeitungsoperationen für die Nachricht und/oder die weitere Nachricht umfasst,
- beispielsweise die Überwachungsrichtline und/oder die Autorisierung verbindungsspezifisch ist,
- beispielsweise eine Verarbeitung der Nachricht und/oder der weiteren Nachricht durch das System anhand der mittels der autorisierten vorgegebenen Verarbeitungsoperationen erfolgt.

12. System nach einem der vorhergehenden Ansprüche, wobei
- der Überwachungstoken mittels eines kryptographischen Schutzes geschützt ist,
- beispielsweise der kryptographische Schutz eine kryptographische Prüfsumme ist,
- beispielsweise das System und/oder Richtlinienbestätigungsservers kryptographische Mittel zum Überprüfen des kryptographischen Schutzes umfassen.

13. System nach einem der vorhergehenden Ansprüche, wobei
- beispielsweise der Überwachungstoken während des Verbindungsaufbaus der Kommunikationsverbindung übertragen wird, oder
- beispielsweise der Überwachungstoken innerhalb eines Security-Protokolls bei der Aushandlung übertragen wird, oder
- beispielsweise der Überwachungstoken innerhalb des Aufbaus einer Security Session übertragen wird,
- beispielsweise der Überwachungstoken von einem Richtlinienbestätigungsserver oder einem Richtlinienverwaltungsserver übertragen wird.

14. System nach einem der vorhergehenden Ansprüche, wobei der Überwachungstoken als eine Erweiterung des verwendeten Kommunikationsprotokolls übertragen wird.

15. System nach einem der vorhergehenden Ansprüche, wobei
- ein Sender und/oder ein Empfänger der Nachricht und/oder der weiteren Nachricht dazu eingerichtet ist, eine Anforderungsnachricht an das System und/oder einen Richtlinienbestätigungsserver und/oder einen Richtlinienverwaltungsserver zu übertragen,
- beispielsweise das System oder das Überwachungssteuerungsmodul dazu eingerichtet sind, den Überwachungstoken anhand der Anforderungsnachricht von dem Richtlinienbestätigungsserver und/oder dem Richtlinienverwaltungsserver abzurufen oder anzufordern;

16. System nach Anspruch 15, wobei der Richtlinienbestätigungsserver und/oder der Richtlinienverwaltungsserver den Überwachungstoken anhand der Anforderungsnachricht an das System übertragen.

17. Computerimplementiertes Verfahren mit folgenden Verfahrensschritten:
- Empfangen einer Nachricht einer Kommunikationsverbindung;
- Steuern einer Überwachung der Nachricht und/oder einer weiteren Nachricht einer weiteren Kommunikationsverbindung und/oder der Kommunikationsverbindung anhand eines Überwachungstokens, wobei der Überwachungstoken eine Überwachungsrichtlinie umfasst.

18. Computerprogrammprodukt mit Programmbefehlen zur Durchführung des Verfahrens nach Anspruch 17.

19. Bereitstellungsvorrichtung für das Computerprogrammprodukt nach Anspruch 18, wobei die Bereitstellungsvorrichtung das Computerprogrammprodukt speichert und/oder bereitstellt.
